# EUROPEAN PATENT SPECIFICATION

(11) **EP 2 571 390 B1**
(45) Date of publication and mention of the grant of the patent: **27.03.2019**
(21) Application number: 11784382.1
(22) Date of filing: 23.05.2011
(51) Int. Cl.: A43B 13/38, A43B 17/00, A43B 1/00, A43B 17/18

(54) **INSOLE FOR FOOTWEAR**
EINLEGESOHLE FÜR SCHUHE
PREMIÈRE POUR ARTICLE CHAUSSANT

(30) Priority: 21.05.2010 US 347304 P
(43) Date of publication of application: 27.03.2013
(73) Proprietor: SOXSOLS, LLC, Corvallis, OR 97333 (US)
(72) Inventor: SHRUM, George, Corvallis OR 97330 (US); LEISER, Judson, Corvallis, OR 97333 (US)
(74) Representative: HGF Limited
(86) International application number: PCT/US2011/037570
(87) International publication number: WO 2011/146927

(56) References cited:
- EP-A2- 0 272 690
- WO-A1-2010/039929
- WO-A2-2007/141000
- WO-A2-2007/141000
- WO-A2-2008/019084
- DE-U1-202005 012 286
- DE-U1-202007 008 016
- FR-A1- 2 929 083
- US-A- 2 425 388
- US-A- 3 835 558
- US-A- 3 985 853
- US-A- 3 985 853
- US-A- 4 055 699
- US-A- 5 233 769
- US-A- 5 233 769
- US-A- 5 388 349
- US-A1- 2002 066 209
- US-A1- 2002 092 199
- US-A1- 2002 092 203
- US-A1- 2003 091 465
- US-A1- 2004 194 352
- US-A1- 2007 022 630
- US-A1- 2010 071 229
- US-B1- 6 286 232

## Description

### FIELD

The present application pertains to an insole for footwear, such as shoes, sandals, boots, etc.

### BACKGROUND

Textiles are used in various applications as an interface between an object or body part and an underlying surface to avoid direct contact between the object/body part and the underlying surface. In many such applications, a slip-resistant bottom layer, usually formed from a polymeric material, is added to the textile to prevent or minimize slippage or shearing between the textile and the underlying surface. Some examples include coasters, floor mats, dining placemats, and footwear insoles. As many of these applications may result in the textile being soiled, it is desirable to employ fabrics that can be repeatedly washed and dried, preferably using a washing machine and dryer. Although many fabrics are generally washable, many polymeric materials that are currently used to increase adherence to an underlying surface (*e.g.,* a floor, shelf, footbed, etc.) are not washable.

When people wear shoes they almost always wear socks. Socks create friction between the foot and shoe for better engagement of foot motions by the shoe, absorb moisture perspired by the foot, create a path between the shoe and skin of the foot to allow air to circulate about the foot, and can keep the foot warm in cold weather or cool in hot weather. However, people wear a number of shoe styles without socks, such as, various sandals, deck shoes, etc. When not wearing socks, the sole of the foot is almost in constant contact with the upper surface of the footbed.

On a hot day a sandal wearer can be very comfortable everywhere but at the sole of the foot. The intimate contact between the foot sole and the footbed of the footwear leaves no room for air to circulate under the foot and can cause considerable sweat under foot. This can be uncomfortable and it can also result in footwear that carries odor.

The problem of lack of breathability at the interface between the footwear and the foot is exacerbated by modern synthetic materials. Some of these synthetic materials can be worse for breathability than traditional materials and can increase both the problem of foot sweat and of footwear odor. For instance, the smooth vinyl foam of the popular Crocs® sandals, when in intimate contact with the sole, can lead to substantial sweating. Many insoles are nothing more than polymer sheets pressed into a shape and are not particularly breathable.

To prevent sweating and foot odor, people often wear socks with sandals and other types of open footwear. However, many people find this aesthetically unappealing. In addition, one loses much of the benefit of wearing open footwear when wearing socks.

Mechanically, open footwear doesn't lend itself to maintaining a breathable textile under foot in the way that a sock maintains itself about the foot. For example, open footwear doesn't capture and retain an insole in place like closed sole footwear, such as a shoe. To solve this, adhesives have been used to bond a fabric insole in place against the footbed of the footwear. Unfortunately, the adhesives do generally not retain their chemistries through the wash cycle of a laundry. Adhesives can delaminate from the textile, and they do not prevent certain textiles from shrinking. Furthermore, adhesives may stick too well to areas of the footbed and can remove portions of the footbed when the insole is removed from the shoe. To overcome the inability to wash the textile, much of the prior art suggests the use of perfume or odor fighting chemistry to hide or mitigate odor.

Ultimately what is needed is a variety of textiles, appropriate for different conditions (warm materials for cool weather, cool materials for warm weather) that can adhere to a footbed (or other substrate in other applications). These textiles desirably should be removable from footwear without pulling out parts of the footbed. These textiles should be washable with household laundry without worry about shrinkage and wearable afterwards. They should be robust to an indefinite number of wash and wear cycles.

US3985853, EP0272690, US5233769, WO2008/019084, WO2007/141000, US2002/0092203, US2007/0022630, DE202005012286, WO2010/039929, FR2929083, US4055699, US2002/092199 and US6286232 disclose various arrangements of insoles.

### SUMMARY

According to a first aspect of the present invention there is provided an insole as described in claim 1.

According to a second aspect of the present invention there is provided a method for making footwear insoles as described in claim 7.

Preferred embodiments of the present invention are disclosed in the appended dependent claims.

The foregoing and other features and advantages of the invention will become more apparent from the following detailed description, which proceeds with reference to the accompanying figures.

### BRIEF DESCRIPTION OF THE DRAWINGS

FIG. 1 is a perspective view of left and right footwear insoles, according to one embodiment.
FIG. 2 is a perspective, exploded view of one of the insoles shown in FIG. 1.
FIG. 3 is a side view of the insole shown in FIG. 1.
FIG. 4 is an enlarged side view of a portion of the insole of FIG. 3.
FIG. 5 is a perspective bottom view of an insole having a pattern of slits or cuts formed in the bottom of the insole.
FIG. 6 is an enlarged, bottom perspective view of a portion of the insole of FIG. 5.
FIGS. 7A and 7B are block diagrams illustrating a method of manufacturing footwear insoles, according to one embodiment.
FIG. 8 is a perspective view of a nozzle dispensing a liquid polymer, such as liquid silicone, onto a layer of fabric material.
FIG. 9 is a graph showing the shrinkage of three different insoles compared to the shrinkage of the bare fabric.

### DETAILED DESCRIPTION

### I. Terms

Unless otherwise noted, technical terms are used according to conventional usage. As used herein, the singular terms "a," "an," and "the" include plural referents unless context clearly indicates otherwise. Similarly, the word "or" is intended to include "and" unless the context clearly indicates otherwise. Also, as used herein, the term "comprises" means "includes." Hence "comprising A or B" means including A, B, or A and B.

The materials, methods, and examples provided are illustrative only and not intended to be limiting. Although methods and materials similar or equivalent to those described herein can be used in the practice or testing of the present disclosure, suitable methods and materials are described below.

In order to facilitate review of the various examples of this disclosure, the following explanations of specific terms are provided:
**Aliphatic:** Any open or closed chain molecule, excluding aromatic compounds, containing only carbon and hydrogen atoms which are joined by single bonds (alkanes), double bonds (alkenes), or triple bonds (alkynes). This term encompasses branched aliphatic compounds, linear aliphatic compounds, saturated aliphatic compounds, unsaturated aliphatic compounds, and combinations thereof.
**Aryl:** A substantially hydrocarbon-based aromatic compound, or a radical thereof (e.g. C₆H₅) as a substituent bonded to another group, particularly other organic groups, having a ring structure as exemplified by benzene, naphthalene, phenanthrene, anthracene, etc.
**Cyclic:** Designates a substantially hydrocarbon, closed-ring compound, or a radical thereof. Cyclic compounds or substituents also can include one or more sites of unsaturation, but does not include aromatic compounds. One example of such a cyclic compound is cyclopentadienone.
**Heteroaryl:** Refers to an aromatic, closed-ring compound, or radical thereof as a substituent bonded to another group, particularly other organic groups, where at least one atom in the ring structure is other than carbon, and typically is oxygen, sulfur and/or nitrogen.

### II. Description

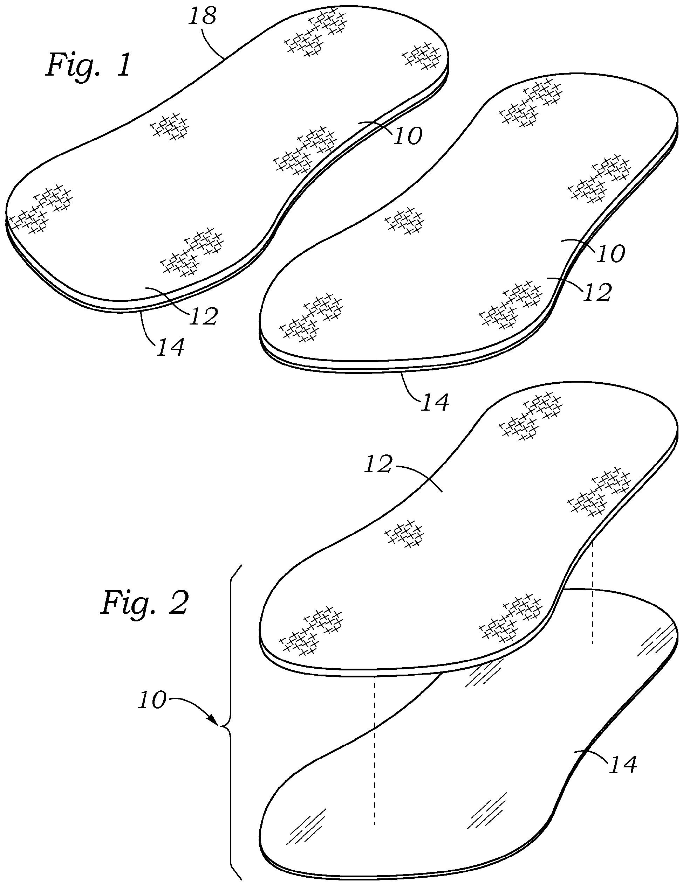

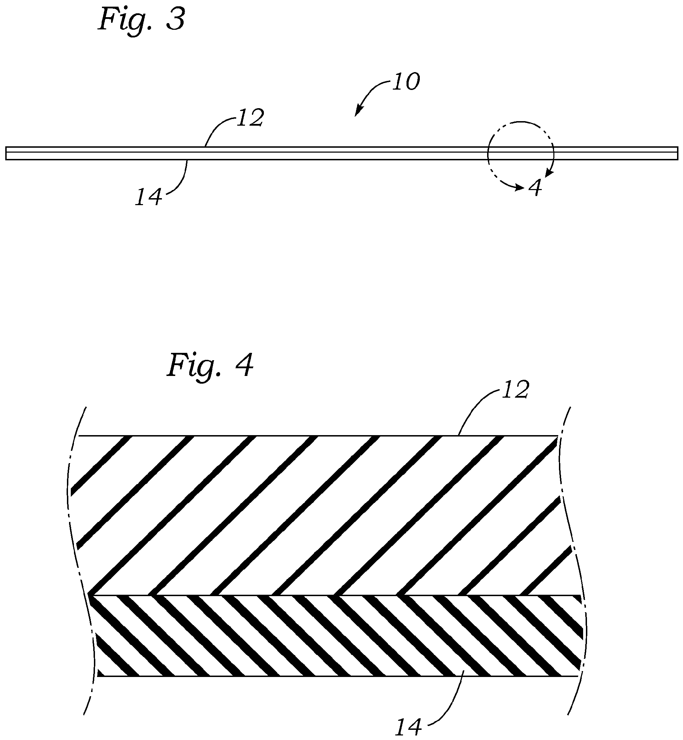

The present disclosures concerns embodiments of a footwear insole that can be used with various types of footwear, including, without limitation, shoes (including open and closed toe shoes), boots, sandals, etc. FIG. 1 is a perspective view of left and right footwear insoles 10, according to one embodiment. As best shown in FIGS. 2 and 3, the insole 10 comprises a top fabric layer 12 and a slip-resistant, cushioning bottom, or base, layer 14. The insole 10 has a peripheral edge 18 defining a toe portion, a heel portion and an arch portion between the toe and heel portion. The insole has an overall shape defined by the peripheral edge 18 that is adapted for insertion into a wide variety of different types of footwear.

The bottom layer desirably comprises a tacky material that can be directly bonded to the fabric layer 12, and can adhere temporarily to the upper surface of a footbed or other subsurface. The insoles 10 are configured to be easily inserted into and removable from footwear. The insoles 10 do not require adhesives to hold them in place and therefore they do not damage the inner surfaces of the footwear when removed like conventional insoles that rely on adhesives. Bottom layer 14 is a continuous layer of material that covers at least 80% of the lower surface of the fabric layer. In other embodiments, the bottom layer 14 covers 100% of the lower surface of the fabric layer.

The top layer 12 is in contact with the foot of the wearer during use if socks are not worn. The top layer 12 can be any common woven or non-woven fabric, and is made from natural or synthetic fibers. Examples include, without limitation, wool felt, cotton batting, polyethylene terephthalate (PET) pile (fleece), cotton terry, canvas, shearling and various flannels. In particular embodiments, the top layer 12 functions like a sock. For example, the material for forming the fabric layer desirably is selected to absorb moisture, provide warmth or cooling, and provide a comfortable feel against the skin. As such, the selected material is more than a decorative layer and desirably has a thickness sufficient to create a structure that provides air passages below the foot and allows air to move under foot. In certain embodiments, the fabric layer 12 has a thickness in the range of about 1 mm to about 5 mm. However, in other embodiments, a fabric layer 12 formed from a very plush fabric, such as shearling, can have a thickness up about 20 mm or greater.

Different people at different times want exposure to different materials. Similarly, in general, people own wool socks, cotton socks, fleece socks, sweat-wicking socks, etc. and select the preferred material depending on their planned activity. Similarly, insoles 10 can be manufactured using a wide variety of materials for the fabric layer 12 so that users can choose from among the various materials depending on personal preference, activity need, and appearance.

The material and design of the bottom layer 14 of the insole desirably is such that the insole can be retained in place against the upper surface of the footwear during normal use (i.e., the insole does not slip relative to the footbed), yet can still be easily removed from the footwear for washing. One way of measuring the ability of an article, such as an insole, to adhere to an underlying surface involves measuring the shear strength of the material, which is the ability of the material to resist a pulling force on the material acting in a direction parallel to the underlying surface. Shear strength can be defined as a summation of at least friction (the adhesion of microscale contact surfaces) and mechanical interlocking between the two contacting surfaces. Another measure of the insole's ability to adhere to an underlying surface is the "tack value", which is the ability of the insole to resist a force pulling on the insole in a direction perpendicular to the underlying surface. The shear strength of the bottom layer 14 can be optimized, for example, by maximizing the surface area in contact with the footwear and selecting a generally chemically tacky material for forming the bottom layer 14. To maximize surface area, it is desirable to provide a bottom layer having a very smooth lower surface or a surface roughness that is similar to the surface roughness of the mating surface of the footwear. In addition, the bottom layer desirably is sufficiently flexible or conformable to allow the insole to conform to the curved surface of the footbed of the footwear.

The bottom layer 14 can comprise any of various polymeric, elastomeric, and/or viscoelastic materials, but also comprises a self-adhering curable material, meaning a material or composition applied in liquid form to the fabric layer which adheres to the fibers of the fabric layer when cured. Thus, such self-adhering material does not include a separate, intermediate layer of adhesive to secure the bottom layer 14 to the fabric layer 12. In addition to the aforementioned characteristics of the bottom layer, another desirable design criteria is that it be capable of being bonded to the fabric layer 12 in a permanent and durable manner such that the insole can be washed repeatedly in a standard washing machine. Moreover, the material for forming the bottom layer desirably is selected to exhibit a desired amount of tackiness that does not substantially diminish after repeated wash cycles.

The bottom layer 14 comprises a liquid silicone rubber (LSR), which is a self-adhering coating composition. The LSR can contain at least one silicon-containing compound or polymers thereof. In particular embodiments, the silicon-containing compound or polymer thereof is an organosiloxane or polymer thereof. The organosiloxane may be cyclic or acyclic. Particular embodiments concern organosiloxane compounds having a general Formula 1, shown below. 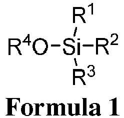 With reference to Formula 1, R¹, R², R³, and R⁴ independently can be selected from hydrogen, aliphatic, aryl, or a heteroatom containing moiety. The heteroatom moiety can be selected from hydroxyl, ether, ester, ketone, aldehyde, amine, amide, heteroaryl, alkyl halide, aryl halide (wherein halides selected from chlorine, iodine, bromine, and fluorine), acyl halide, carbonate, peroxy, hydroperoxy, phosphate, phosphoryl, phosphine, sulfinyl, sulfonyl, thiol, cyano, and combinations thereof.

In particular embodiments, the organosiloxane can have a general Formula 2 and/or 3, illustrated below. 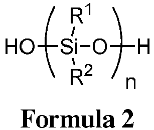 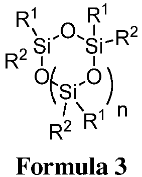 With reference to Formulas 2 and 3, R¹ and R² independently can be selected from hydrogen, aliphatic, aryl, or a heteroatom containing moiety (selected from hydroxyl, ether, ester, ketone, aldehyde, amine, amide, heteroaryl, alkyl halide, aryl halide [wherein halides selected from chlorine, iodine, bromine, and fluorine], acyl halide, carbonate, peroxy, hydroperoxy, phosphate, phosphoryl, phosphine, sulfinyl, sulfonyl, thiol, and cyano); and n ranges from at least 2 to about 1000; more typically from at least two to about 100; more typically from at least 2 to about 50.

In a specific implementation, the bottom layer 14 is formed from a liquid silicone rubber comprising a polydimethylsiloxane elastomer, one example of which is sold under the tradename Dow Corning 3730. In working embodiments, the LSR layer covers the entire bottom surface of the fabric layer 12 and has a thickness in the range of about 0.3 mm to about 6 mm.

LSR is advantageous for several reasons. First, it is notably non-toxic and is often used in a number of common household kitchen tools and garments. Second, it has a translucent, almost clear, appearance, which is desirable for certain applications. For example, printed matter, such as branding or the insole size, can be printed on the bottom of the fabric layer 12. The printed matter is clearly readable through the LSR bottom layer. Third, the manufacturing process substantially minimizes the amount of solvents used (unlike calendaring, or the tackification of some polymers) and therefore is safer and less expensive than processes requiring large amounts of solvents. In the process described below, a relatively small amount of a solvent is used as a tackifier for the LSR. Fourth, commercially available LSR can be further modified to increase or decrease tackiness as required for a particular application.

In alternative embodiments, materials other than LSR can be used to form the bottom layer but typically require the use of solvents. Some examples of other materials that can be used to form the bottom layer include, for example, urethane, EDPM, vinyl rubber, neoprene, latex rubber, buna rubber, natural rubber and other similar materials.

A surprising result of the insole is its durability in the wash and wear cycle. In one embodiment, for example, the insole 10 comprises a fabric layer 12 made of wool felt and bottom layer made of LSR. Wool felt is notorious for an inability to be washed in hot water and then dried in a hot air machine without substantial shrinking. The combination of heat and agitation causes the scales of wool fibers to work past each other and hold the sheet of textile into a smaller mass. However, bonding wool felt to an impervious layer of LSR prevents shrinking of the wool felt. The individual fibers of the textile are not allowed to move enough with respect to each other and as such, the material can withstand an indefinite number of wash and wear cycles without any noticeable shrinking.

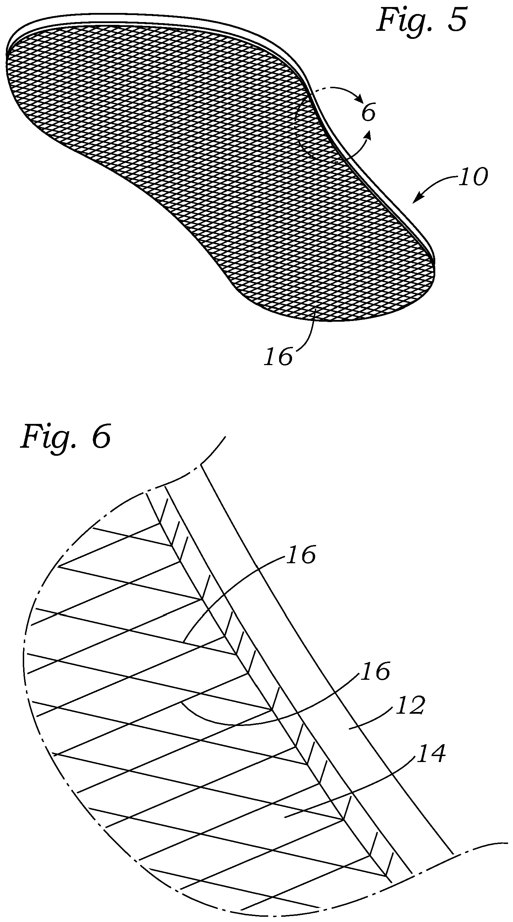

The shear strength of the interface between the bottom surface of the bottom layer 14 and the subsurface to which it is mounted (e.g., the upper surface of a footbed) can be further enhanced by sipes 16 (which can be referred to as "micro-sipes" because they can be formed relatively small). As best shown in FIG. 6, sipes 16 are slits or cuts in the bottom layer 14 that can be formed by stamping or cutting the bottom layer with a blade or equivalent mechanism. The sipes 16 desirably have no width (i.e., the material on opposite sides of a sipe can contact each other when the insole is laid flat), although in other embodiments the sipes can have a measurable width, in which case they form very narrow grooves or slots in the base layer 14.

As shown, the sipes can extend from the bottom surface of layer 14 only partially through thickness of the bottom layer such that the sipes terminate short of the upper surface of layer 14, although in other embodiments the sipes can extend the entire thickness of layer 14. In particular embodiments, for example, the sipes have a depth (measured from the bottom surface of layer 14 toward the fabric layer 12) of about 0.3 mm to the full thickness of layer 14 (which can range, for example, from about 0.3 mm to about 6 mm).

The sipes 16 can be formed in any desired pattern on the lower surface of layer 14, such as the criss-crossing pattern shown in FIGS. 5 and 6. The illustrated pattern of sipes comprises a first set of spaced-apart parallel lines intersecting spaced-apart parallel lines of a second set. The spacing between parallel sipes can be in the range of about 1 mm to about 15 mm. The sipes desirably are oriented generally perpendicular to the length of the insole 10, extending generally laterally across the width of the insole from one edge of the insole to the other. In another embodiment, the sipes 16 can be formed in a pattern in which all of the sipes are parallel to each other and extend in the same direction. In other embodiments, the sipes can be curved and/or they can extend partially across the width of the insole. It is believed that the sipes can enhance the shear strength of layer 14 by interlocking with surface features of the opposing subsurface. In addition, tensile forces applied to the insole, as can occur during walking or running, can cause the insole to shift relative to the underlying surface of the footwear. The sipes can break the strain path on the bottom layer across a large distance caused by tensile forces on the insole to help maintain the bottom layer in intimate contact with the underlying surface.

The sipes are further advantageous in that they provide capillaries or pathways that help wick away excess water from the interface of the bottom layer and the underlying surface. Moreover, the sipes increase the flexibility of the insole and its ability to conform to the shape of the footbed.

A preferred method of manufacturing the insole 10 involves the use of LSR. LSR handles well without the need for solvents. Other types of polymers can be used instead of LSR but require more involved bonding processes that are more expensive and make use of solvents. For instance, urethane can be used to form the bottom layer 14 but its processing is substantially more toxic and typically requires more complex health and safety control systems and permitting.

Various techniques and/or mechanisms can be used to apply the bottom layer 14 to the fabric layer 12, depending on the material selected for forming the bottom layer. One specific process for manufacturing insoles 10, which involves coating a layer of fabric with a liquid polymer, is described in detail below. Other known techniques can be used for bonding polymers to fabric, such as calendaring and various forms of coating.

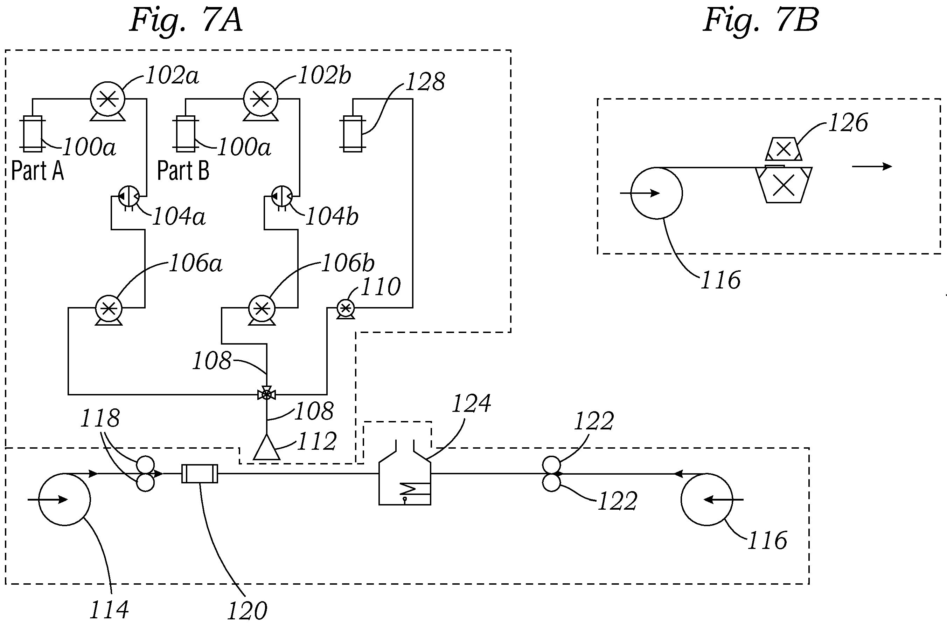

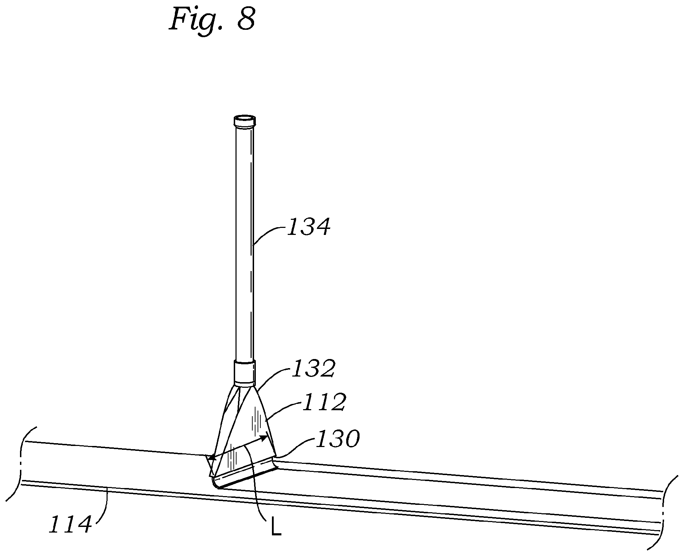

FIGS. 7A , 7B and 8 show an exemplary system for manufacturing footwear insoles. For purposes of description, the illustrated system is described in the context of using an LSR that is commercially available as a two-part kit, such as Dow Corning 3730, for forming the base layer 14 of the insoles. However, the system illustrated in FIGS. 7A , 7B and 8 and described herein can also be adapted for manufacturing insoles using a material other than LSR for forming the base layer 14.

As shown in FIG. 7A, separate pumps 102a, 102b remove the two LSR components (identified as Part A and Part B in FIG. 7A) from their respective reservoirs 100a, 100b (e.g., shipping containers). The output pipes of each of these pumps transfer the LSR components into respective downstream precision metering pump systems (each comprising a respective pressure and flow controller 104a, 104b and a respective pump 106a, 106b downstream of the pressure and flow controller) that maintain an output flow of each component part with a highly controlled volumetric flow rate and pressure. The two flows meet at the input end of a static mixer 108. Additional ingredients can be added to the mixture, such as a tackifying agent (*e.g.,* a high molecular weight solvent, such as naphtha), which can be stored in a reservoir 128. The dosage of the tackifying agent can be tightly controlled by a precision gear pump 110. The output end of the static mixer feeds into a dispensing nozzle 112 that shapes the flow of LSR into a band which is applied onto the material that forms the fabric layer of an insole.

In particular embodiments, the mixture dispensed from the nozzle comprises about 55% to about 80% Part A of Dow Corning 3730 LSR, and more particularly about 60% to about 80% Part A of Dow Corning 3730 LSR; about 20% to about 45% Part B of Dow Corning 3730 LSR; and 0 to 5% naphtha.

The fiber material in the illustrated embodiment is provided as a roll of material 114. The roll 114 is unwound from an upstream dereeler, and rewound onto another roll or spool 116 at the end of the processing after the LSR is applied to the fiber material. Feed rollers 118, 122 upstream and downstream of the dispensing nozzle 112 keep the fiber moving at the correct amount of line tension and at the correct velocity. Between the upstream feed rollers 118 and the nozzle 112 the fiber material extends through a printing device 120 that can print identification and/or branding information on the fiber material. The printing device 120 can comprise, for example, a rotary screen printer, an industrial ink jet printer, a rotary pad printer, or equivalent mechanism.

Following the printing device 120, the layer of fabric material 114 is fed under the nozzle 112, which dispenses LSR onto the fabric layer to form a laminate comprised of the fabric layer and a layer of uncured LSR. Referring to FIG. 8, the nozzle 112 in the illustrated embodiment has a tapered, generally triangular body comprising a wide lower end 130 defining an outlet opening for dispensing the LSR and a relatively narrow upper end 132 that is in fluid communication with a feed pipe 134 that transfers LSR from the mixer 108 to the nozzle 112. The outlet opening at the lower end 130 of the nozzle 112 desirably is sized to apply a continuous layer of LSR that covers substantially the entire upper surface of the fabric material. As shown in FIG. 8, the length L of the outlet opening (the length L extending perpendicular to the longitudinal edges of the fabric material) can be equal to or slightly smaller than the width of the fabric material 114 to ensure that the LSR forms a layer covering substantially the entire upper surface of the fabric material.

Referring again to FIG. 7A, between the nozzle 112 and the downstream feed rollers 122, the laminate extends through a continuous feed curing oven 124 that cures the LSR causes it to bond directly to the fibers of the fabric. The cured LSR and fiber material sheet then is rewound onto roll 116 to wait for further processing. In particular embodiments, the curing or residence time in the oven is in the range of about 1 to 5 minutes and the curing temperature of the oven is in the range of about 250 degrees F to 450 degrees F.

Referring to FIG. 7B, the LSR coated fabric can be dispensed from the roll 116 into a cutting apparatus 126 that cuts left and right insoles 10 of the same size from the coated fabric. If desired, sipes 16 can be formed in the LSR layer, such as by feeding the LSR coated fabric through a sipe-forming station (not shown) upstream of the cutting apparatus 126. The sipe-forming station can include, for example, one or more rollers having a series of blades that cut sipes into the LSR layer. After the insoles 10 are cut into their final shape by the cutting apparatus, they can be packaged as needed.

Insoles and processes for forming insoles as described herein have several advantages over known insoles and manufacturing processes. For example, the process of bonding LSR to fabric described above is simple, inexpensive and safe and does not involve monitoring of pollutants or environmental and health hazards such as with solvents. The insole does not use or require adhesives like many known insoles. Adhesives are not typically able to withstand the wash and dry cycle of a typical household laundry without delaminating or preventing shrinkage of many textiles. Unlike prior solutions, the insole can be treated like a normal everyday garment that is worn and subsequently washed and dried mechanically with other clothes. The insole can be subjected to numerous wash and wear cycles without delaminating or shrinking like insoles that incorporate adhesives (which are usually disposed of after soiling).

Finally, it should be noted that the materials and processes described herein can be used to make articles other than footwear insoles. In general, an article can comprise a fabric layer (*e.g.,* fabric layer 12) and a bottom layer bonded to the fabric layer (*e.g.,* bottom layer 14). The article can be, for example, a coaster, a floor mat, a dining placemat, a mat for recreational vehicles, a baby changing mat, a rug, a mouse pad, a desk top writing pad, window sill dressing, a shelf liner, a table cloth, a dust cover, etc.

### Example 1

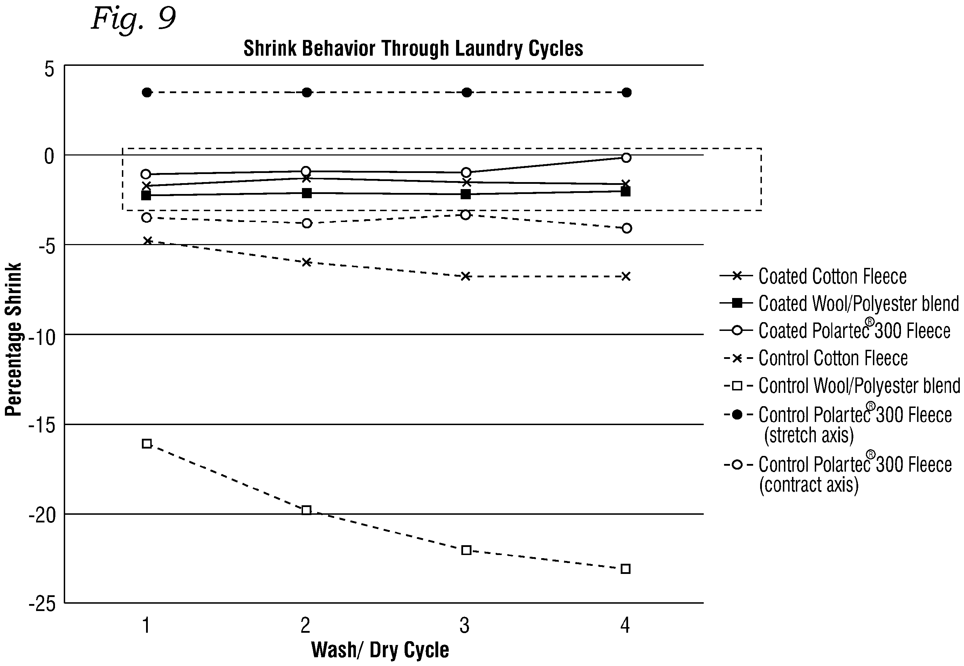

Several insoles were made by forming a layer of LSR on the following types of fabric: cotton fleece, an 80% wool/20% polyester blend felt, and Polartec® 300 fleece. Shrinkage of the insoles was measured using the ISO 3759 standard for preparation of marking and measuring textiles for dimensional change. Shrinkage was encouraged by four wash-dry cycles loosely guided by the ISO 6330 standard Type B (rotary agitator washer) and Procedure E (tumble dry). The washing temperature was about 64 degrees C to about 66 degrees C. The dry load was about 6.7 kg, and included three samples of each of the coated fabrics. In addition to the coated materials, uncoated control fabrics were washed and dried in the same batch. Through successive aggressive wash and dry cycles the coated fabrics were constrained to limited dimensional change. The average shrinkage for each type of coated and uncoated fabric is shown in FIG. 9. As shown, the coated materials were constrained to a dimensional change of less than 3% while the uncoated materials experienced greater shrinkage, most notably the wool/polyester blend, which shrank by about 23% after four wash and dry cycles.

### Example 2

Various standards can be used to quantify the tack value and shear strength of the base layer of the insole, including ASTM D2979, ASTM D1894, and ASTM D3654 Procedure A (Test Methods for Shear Adhesion of Pressure Sensitive Shapes). In particular embodiments, the insole has a base layer formed from LSR having a tack value of about 0.2 N to about 2.2 N, and more desirably between about 1 N to about 2 N, as measured according to ASTM D2979.

Under ASTM D1894, the shear strength of a material is defined as ratio equal to the pulling force applied to the test material to the total mass resting on top of the test material. In particular embodiments, the insole has a base layer formed from LSR having such a ratio in the range between about 2 to about 24.

ASTM D3654 Procedure A measures the time it takes for an adhesive material to separate from another surface under gravity. Under this standard, an insole having a base layer formed from LSR did not have a measurable value. Comparatively, a known footwear insole sold under the brand Summer Soles, which has an adhesive on its lower surface, measured 1 minute, 10 seconds under this standard.

## Claims

1. An insole (10) for insertion into footwear comprising:
a fabric layer (12) made from natural or synthetic fibers and having a peripheral edge (18) defining a toe portion, a heel portion, and an arch portion, the fabric layer (12) having a bottom surface and an exposed fabric upper surface that can contact the foot or sock of a wearer; and
a base layer (14) comprised of a self-adhering, cured liquid silicone rubber material applied in liquid form and directly bonded to the bottom surface of the fabric layer (12) without a separate intermediate adhesive layer between the fabric layer (12) and the base layer (14), the base layer (14) covering at least 80% of the bottom surface of the fabric layer (12) and having a bottom surface that is placed in contact with a footbed of the footwear.

2. The insole (10) of claim 1, wherein the base layer (14) has a bottom surface formed with a plurality of sipes (16), wherein material on opposing sides of the sipes (16) contact each other when the insole (10) is laid flat.

3. The insole (10) of claim 1, wherein the base layer (14) has a thickness of about 0.3 mm to about 6 mm.

4. The insole (10) of claim 1, wherein the base layer (14) has a tack value of about 0.2 N to about 2.2 N.

5. The insole (10) of claim 1, wherein the fabric layer (12) has a thickness in the range of about 1 mm to about 20 mm and comprises cotton or wool or polyethylene terephthalate.

6. The insole (10) of claim 1, wherein the insole (10) has a shear strength of about 2 to about 24 under ASTM D1894.

7. A method for making footwear insoles (10) according to claims 1 to 6, comprising:
applying a continuous layer of a self-adhering coating material comprised of liquid silicone rubber in liquid form along at least 80% of a bottom surface of a fabric layer (114) made from natural or synthetic fibers to form a laminate;
curing the coating material applied to the fabric layer (114), causing the coating material to bond directly to the fabric layer (114) without a separate intermediate adhesive layer between the fabric layer (114) and the coating material; and
after curing the coating material, cutting one or more insoles (10) from the laminate, wherein each insole comprises a respective base layer (14) comprised of the cured coating material and a respective fabric layer (12) having an exposed fabric upper surface that can contact the foot or sock of a wearer.

8. The method of claim 7, wherein the cured coating material substantially covers the entire bottom surface of the fabric layer (12) of each insole.

9. The method of claim 7, further comprising forming sipes (16) in the cured coating material.

10. The method of claim 7, further comprising supplying the fabric layer (114) from a roll of fabric material (114) to a location where the continuous layer of the self-adhering coating material is applied and the laminate is formed, and continuously feeding the laminate through a curing oven to cure the coating material.

11. The method of claim 10, further comprising winding the laminate onto a spool downstream of the curing oven.

12. The method of claim 10, wherein the coating material is applied to the fabric layer (114) by a dispensing nozzle (112) positioned above the fabric layer (114) as the fabric layer (114) is continuously fed underneath the nozzle (112).

13. The method of claim 10, further comprising mixing a tackifying agent with the coating material before it is applied to the fabric layer (114).

## Patentansprüche

1. Einlegesohle (10) zum Einfügen in Schuhwerk, umfassend:
eine Gewebeschicht (12) aus Natur- oder Kunstfasern und mit einem Umfangsrand (18), der einen Zehenabschnitt, einen Fersenabschnitt und einen Gewölbeabschnitt definiert, wobei die Gewebeschicht (12) eine untere Fläche und eine freiliegende obere Gewebefläche aufweist, die mit dem Fuß oder der Socke eines Trägers in Kontakt kommen kann; und eine Grundschicht (14) aus einem selbstklebenden, gehärteten Flüssigsilikongummimaterial und das in flüssiger Form aufgebracht und direkt mit der unteren Fläche der Gewebeschicht (12) ohne eine separate zwischenliegende Klebeschicht zwischen der Gewebeschicht (12) und der Grundschicht (14) verbunden ist, wobei die Grundschicht (14) mindestens 80 % der unteren Fläche der Gewebeschicht (12) abdeckt und eine untere Fläche aufweist, die in Kontakt mit einem Fußbett des Schuhwerks platziert ist.

2. Einlegesohle (10) nach Anspruch 1, wobei die Grundschicht (14) eine untere Fläche aufweist, die mit einer Vielzahl von Lamellen (16) gebildet ist, wobei Material auf gegenüberliegenden Seiten der Lamellen (16) einander berührt, wenn die Einlegesohle (10) flach gelegt ist.

3. Einlegesohle (10) nach Anspruch 1, wobei die Grundschicht (14) eine Stärke von etwa 0,3 mm bis etwa 6 mm aufweist.

4. Einlegesohle (10) nach Anspruch 1, wobei die Grundschicht (14) einen Haftwert von etwa 0,2 N bis etwa 2,2 N aufweist.

5. Einlegesohle (10) nach Anspruch 1, wobei die Gewebeschicht (12) eine Stärke im Bereich von etwa 1 mm bis etwa 20 mm aufweist und Baumwolle oder Wolle oder Polyethylenterephthalat umfasst.

6. Einlegesohle (10) nach Anspruch 1, wobei die Einlegesohle (10) eine Scherfestigkeit von etwa 2 bis etwa 24 gemäß ASTM D1894 aufweist.

7. Verfahren zur Herstellung von Schuheinlagen (10) nach den Ansprüchen 1 bis 6, umfassend:
Aufbringen einer durchgehenden Schicht aus einem selbstklebenden Beschichtungsmaterial bestehend aus Flüssigsilikongummi in flüssiger Form auf mindestens 80 % einer unteren Fläche einer Gewebeschicht (114) aus Natur- oder Kunstfasern, um ein Laminat zu bilden;
Aushärten des auf die Gewebeschicht (114) aufgebrachten Beschichtungsmaterials, was verursacht, dass sich das Beschichtungsmaterial direkt, ohne eine separate zwischenliegende Klebeschicht zwischen der Gewebeschicht (114) und dem Beschichtungsmaterial, mit der Gewebeschicht (114) verbindet;
und nach dem Aushärten des Beschichtungsmaterials Schneiden von einer oder mehreren Einlegesohlen (10) aus dem Laminat, wobei jede Einlegesohle eine entsprechende Grundschicht (14) aus dem gehärteten Beschichtungsmaterial und eine jeweilige Gewebeschicht (12) mit einer freiliegenden oberen Gewebefläche umfasst, die den Fuß oder die Socke eines Trägers berühren kann.

8. Verfahren nach Anspruch 7, wobei das gehärtete Beschichtungsmaterial im Wesentlichen die gesamte untere Fläche der Gewebeschicht (12) von jeder Einlegesohle abdeckt.

9. Verfahren nach Anspruch 7, ferner umfassend ein Bilden von Lamellen (16) in dem gehärteten Beschichtungsmaterial.

10. Verfahren nach Anspruch 7, ferner umfassend ein Zuführen der Gewebeschicht (114) von einer Rolle Gewebematerial (114) zu einer Stelle, an der die durchgehende Schicht des selbstklebenden Beschichtungsmaterials aufgebracht und das Laminat gebildet wird, und ein durchgehendes Zuführen des Laminats durch einen Härteofen, um das Beschichtungsmaterial auszuhärten.

11. Verfahren nach Anspruch 10, ferner umfassend ein Wickeln des Laminats auf eine Spule stromabwärts von dem Härteofen.

12. Verfahren nach Anspruch 10, wobei das Beschichtungsmaterial durch eine Ausgabedüse (112), die oberhalb der Gewebeschicht (114) angeordnet ist, auf die Gewebeschicht (114) aufgebracht wird, während die Gewebeschicht (114) durchgehend unterhalb der Düse (112) zugeführt wird.

13. Verfahren nach Anspruch 10, ferner umfassend ein Mischen eines Haftvermittlers mit dem Beschichtungsmaterial, bevor es auf die Gewebeschicht (114) aufgebracht wird.

## Revendications

1. Semelle intérieure (10) pouvant être insérée dans un article chaussant, comprenant :
une couche tissée (12) réalisée avec des fibres naturelles ou synthétiques, et possédant un bord périphérique (18) définissant une partie d'orteils, une partie de talon, et une partie de voûte, la couche tissée (12) possédant une surface inférieure et une surface supérieure en tissu exposée étant au contact du pied ou de la chaussette d'un porteur ; et
une couche de base (14) comprenant une matière de caoutchouc de silicone liquide durci auto-adhésive appliquée sous forme liquide et collée directement sur la surface inférieure de la couche tissée (12) sans une couche adhésive intermédiaire distincte entre la couche tissée (12) et la couche de base (14), la couche de base (14) couvrant au moins 80 % de la surface inférieure de la couche tissée (12), et possédant une surface inférieure placée au contact d'une assise plantaire de l'article chaussant.

2. Semelle intérieure (10) selon la revendication 1, la couche de base (14) possédant une surface inférieure réalisée avec une pluralité de lamelles (16), le matériau des côtés opposés des lamelles (16) entrant mutuellement en contact lorsque la semelle intérieure (10) est posée à plat.

3. Semelle intérieure (10) selon la revendication 1, l'épaisseur de la couche de base (14) mesurant entre environ 0,3 mm et environ 6 mm.

4. Semelle intérieure (10) selon la revendication 1, la force d'adhérence de la couche de base (14) étant comprise entre environ 0,2 N et environ 2,2 N.

5. Semelle intérieure (10) selon la revendication 1, l'épaisseur de la couche tissée (12) étant comprise entre environ 1 mm et environ 20 mm, et comprenant du coton ou de la laine ou du polyéthylène téréphtalate.

6. Semelle intérieure (10) selon la revendication 1, la semelle intérieure (10) ayant une résistance au cisaillement comprise entre environ 2 et environ 24 selon la norme ASTM D1894.

7. Méthode de fabrication de semelles intérieures (10) selon une quelconque des revendications 1 à 6, comprenant :
l'application d'une couche continue de matière de revêtement auto-adhésive composée de caoutchouc de silicone liquide, sous forme liquide, le long d'au moins 80 % d'une surface inférieure d'une couche tissée (114) réalisée en fibres naturelles ou synthétiques pour former un stratifié ;
le durcissement de la matière de revêtement appliquée sur la couche tissée (114), en donnant lieu au collage de la matière de revêtement directement sur la couche tissée (114) sans une couche adhésive intermédiaire distincte entre la couche tissée (114) et la matière de revêtement ; et
après le durcissement de la matière de revêtement, la découpe d'une ou plusieurs semelles intérieures (10) du stratifié, chaque semelle intérieure comprenant sa propre couche de base (14) comprenant la matière de revêtement durcie et une couche tissée (12) respective possédant une surface supérieure en tissu exposée pouvant être au contact du pied ou de la chaussette d'un porteur.

8. Méthode selon la revendication 7, la matière de revêtement durcie couvrant substantiellement l'intégralité de la surface inférieure de la couche tissée (12) de chaque semelle intérieure.

9. Méthode selon la revendication 7, comprenant en outre la formation de lamelles (16) dans la matière de revêtement durcie.

10. Méthode selon la revendication 7, comprenant en outre la fourniture de la couche tissée (114) depuis un rouleau de couche tissée (114) dans un emplacement où est appliquée la couche continue de matière de revêtement autoadhésive et est formé le stratifié, et l'introduction en continu du stratifié dans un four de polymérisation pour le durcissement de la matière de revêtement.

11. Méthode selon la revendication 10, comprenant en outre l'enroulement du stratifié sur une bobine en aval du four de polymérisation.

12. Méthode selon la revendication 10, la matière de revêtement étant appliquée sur la couche tissée (114) par une buse de distribution (112) positionnée au-dessus de la couche tissée (114), au fur et à mesure du passage en continu de la couche tissée (114) sous la buse (112).

13. Méthode selon la revendication 10, comprenant en outre le mélange d'un agent d'adhésivité avec la matière de revêtement avant son application sur la couche tissée (114).
